# EUROPEAN PATENT APPLICATION

(11) **EP 3 361 336 A1**
(43) Date of publication of application: **15.08.2018**
(21) Application number: 18461508.6
(22) Date of filing: 25.01.2018
(51) Int. Cl.: G05B 19/18, G05B 19/404, G05B 23/02, G05B 19/418, G05B 19/425, G05B 19/408, G05B 19/409

(54) **CONTROL AND VISUALISATION SYSTEM FOR PROCESS OF WELDING OR MOUNTING DETAILS USING MULTIAXIAL POSITIONER, CONTROL METHOD FOR MULTIAXIAL WELDING POSITIONER WITH VISUALISATION SYSTEM FOR THE PROCESS, AND MULTIAXIAL WELDING POSITIONER PROVIDED WITH CONTROL AND VISUALISATION SYSTEM FOR THE PROCESS**

(30) Priority: 13.02.2017 PL 42047817
(71) Applicant: Ec Engineering Spólka Z Ograniczona Odpowiedzialnoscia, 31-358 Krakow (PL)
(72) Inventor: Halecki, Dariusz, 31-416 Kraków (PL); Markowicz, Piotr, 43-300 Bielsko-Bia a (PL)
(74) Representative: AOMB Polska Sp. z.o.o.

(57) **Abstract**

The object of the invention is a control and visualisation system for the process of welding or mounting details using a multiaxial positioner, a control method for a multiaxial welding positioner with a visualisation system for the process, and a multiaxial welding positioner provided with a control and visualisation system for the process.

A control and visualisation system for a process of welding or mounting details using a multiaxial positioner, is characterised in that the control system is configured in such a manner that based on setting values assigned to each stage of the process and/or a positioned detail (3), a screen (1) presents the stage of the process and/or the positioned detail (3), wherein at the same time the at least one actuator of the multiaxial positioner (2), via commands transmitted by the system to this actuator, is set into position according to the previously defined setting values, corresponding to the stage of the process and/or detail (3) presented on the screen (1).

## Description

The object of the invention is a control and visualisation system for the process of welding or mounting details using a multiaxial positioner, a control method for a multiaxial welding positioner with a visualisation system for the process, and a multiaxial welding positioner provided with a control and visualisation system for the process. More particularly, the invention relates to the automation of the manual process of mounting and welding using a multiaxial welding positioner with a visualisation system. The invention also relates to a control method for a welding positioner with a visualisation function for the process of welding and a multiaxial positioner provided with a system with computer software which enables the realisation of this method.

Currently, the following types of positioners are available on the market:
- Type L positioners adjustable with respect to rotation and tilting speed, enabling the positioning of welded elements in three axes, i.e. rotation, tilt, height. In addition, the use of a vector inverter enables determining the torque of the tilt with higher accuracy.
- biaxial positioners, having a wide operating range, often secured by a double brake.
- triaxial positioners, intended for special tasks of assembly and welding.

These positioners have the three following axes: arm height, arm rotation (a full range of 360°), table plate rotation (a full range of 360°).

To sum up, the devices currently present on the market are primarily bi- or triaxial positioners with limited possibilities of adjusting the welded elements. Solutions currently used on the market do not provide a precise manual method of welding the individual details of the given product. Moreover, there is no system which would provide repetitiveness of the process of welding, particularly important in the case of manually realised mass production. The process of bonding is a specific process, requiring continuous changes and control in real time, which directly affects the quality of execution of the joint. Until now, the positioning of a welded detail was usually performed manually, which led to frequent errors in the prepared joints.

In the currently used solutions of mechanisation for the process of manual welding, the welding positioners introduce a number of improvements. They allow minimising the occurrence of the so-called forced positions, enabling optimal orienting of the weld during its application. Comfortable access and ergonomics are provided for the welding person, which also preferably affects the safety of the process of welding. Both the quality and efficiency of the process of welding are increased. On the other hand, a disadvantage of those solutions is the necessity of multiple readjustments of the position of the table by the welder during the process, which consumes considerable amounts of time, particularly in the case of multiaxial positioners.

This is why the purpose of the present invention is to provide a solution which would facilitate and accelerate the process of welding or mounting details, at the same time providing repetitiveness and accuracy of the process.

Full programmability of the process of positioning the welded detail will eliminate the number of joints performed incorrectly, due to the precise and preprogrammed process of welding performed by a specialist welder operating a multiaxial positioner.

A control and visualisation system for a process of welding or mounting details using a multiaxial positioner according to the invention comprises:
a multiaxial positioner provided with at least one actuator, providing the possibility of positioning the detail at least in one axis;
a control system, comprising at least a processor, a memory, a controller, a computer program comprising instructions performed by the processor, said instructions being related to a control method for the multiaxial positioner, as well as one or more input/output devices;
a user interface, preferably a graphical user interface, adapted to manage and/or control the process by a user;
a display, adapted to a presentation of information and/or management and control of the process by the user, preferably by means of a graphical user interface,
the control system being configured in such a manner that based on setting values assigned to each stage of the process or the positioned detail, a screen presents the stage of the process or the positioned detail, wherein at the same time the at least one actuator of the multiaxial positioner, via commands transmitted by the system to said actuator, is set into position according to previously defined setting values, corresponding to the stage of the process and/or detail presented on the screen.

Preferably, the setting values are saved in a file stored in the system memory or on another data carrier, particularly an external one, whose contents may be read and processed by the control system.

Preferably, the setting values assigned to the given stage of the process or detail are displayed on the screen, and the user defines the settings of the multiaxial positioner, introducing these setting values by means of the user interface, as a result of which the control system transmits a signal to the actuators which position the detail according to the given setting values.

Preferably, the settings are defined by a real configuration of the positioner with the attached detail and reading real positions of the actuators.

Preferably, the actuators are in the form of servomotors.

Preferably, the control system consists of a computer with an integrated controller/control unit which transmits instructions to the actuators.

Preferably, the control system consists of the computer connected to a programmable logical PLC controller, which transmits instructions to the actuators. In order to connect the computer to the PLC controller, a Modbus TCP protocol is used, based on a client-server structure, the PLC controller being a client-type device (master), and the computer being a server-type device (slave).

A control method for a multiaxial welding positioner according to the invention comprises:
controlling a multiaxial positioner, provided with an at least one actuator, providing the possibility of positioning a detail at least in one axis;
by means of a control system, which comprises at least a processor, a memory, a controller, a computer program comprising instructions performed by the processor, related to the control method for the multiaxial positioner, as well as one or more input/output devices;
and using a user interface, preferably a graphical user interface, adapted to manage and/or control the process by a user; and
a display, adapted to a presentation of information and/or management and control of the process by the user, preferably by means of a graphical user interface,
the control system being configured in such a manner that it comprises the following steps:
   displaying on a screen information on subsequent stages of the process and/or presentation of a positioned detail;
   at the same time setting at least one actuator in a position according to predefined setting values, corresponding to the stage of the process and/or detail presented on the screen, via commands transmitted by the system to this actuator.

Preferably, the setting values are saved in a file stored in the system memory or on another data carrier, particularly an external one, whose contents may be read and processed by the control system.

Preferably, the setting values assigned to the given stage of the process and/or detail are displayed on the screen, and the user defines the settings of the multiaxial positioner, introducing these setting values by means of the user interface, as a result of which the control system saves these values in the memory and later transmits a signal to the actuators which position the detail according to the saved setting values.

Preferably, the settings are defined based on a real configuration of the positioner with the attached detail and reading real positions of the actuators.

Preferably, the actuators are in the form of servomotors.

Preferably, the control system consists of a computer with an integrated controller/control unit which transmits instructions to said actuators.

Preferably, the control system consists of the computer connected to a programmable logical PLC controller which transmits instructions to the actuators. In order to connect the computer to the PLC controller, a Modbus TCP protocol is used, based on a client-server structure, the PLC controller being a client-type device (master), and the computer being a server-type device (slave).

A multiaxial welding positioner according to the invention, provided with at least one actuator providing the possibility of positioning a detail in at least one axis, has a control and visualisation system for the process of welding or mounting, as described above.

Full automation of the process of positioning enables full programmability of the process of positioning the welded detail, providing the repetitiveness of welding conditions, which is particularly important with launched mass production. While retaining the repetitiveness of other parameters important for the production process, the implemented technology will allow eliminating the currently occurring errors of manual positioning, repeatedly leading to the creation of defective welded joints. The exclusion of manual positioning will also increase the number of details produced properly, thus reducing the share of erroneous details, prepared improperly.

The invention will now be presented in more detail in a preferable embodiment, with reference to the attached drawings, in which:

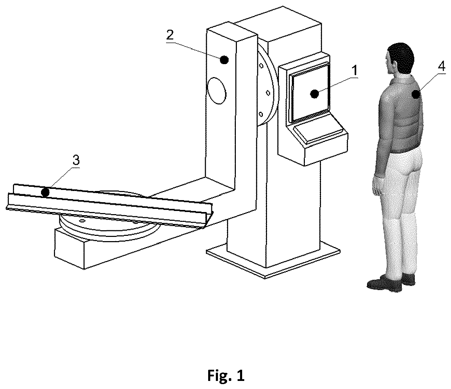

- Fig. 1: presents the configuration of a welding station during operation, using a multiaxial welding positioner provided with a visualisation system for the process, according to the invention.

### A preferable embodiment of the invention

In a preferable embodiment, fig. 1 presents an operator 4 of the workstation at the display 1 of the positioner 2, which presents information related to the method of welding the individual details 3, including information related to the sequence, direction or the preparation of welds. The terms display, monitor or screen are used interchangeably and represent like means. The multiaxial positioner 2 is provided with a user interface. The user interface is understood very broadly and it can constitute a desktop with a display 1, on which the graphical user interface is presented to manage or control the process by the user 4 along with additional buttons placed on the desktop. Alternatively, control may proceed entirely by means of the display 1 via the graphical user interface. The positioner 2 is provided at least with one actuator, e.g. a servomotor which sets the mounting plate in a correct position.

In the presented embodiment, the unit which is functionally responsible for the control and visualisation system is a stationary computer provided with a standard network interface card with an RJ-45 connector. The computer is connected via it to the PLC controller, which directly controls the servomotors of the welding positioner. In the described embodiment, the Modbus TCP protocol has been used for communication between the computer and the PLC controller. It is a protocol based on a client-server structure, which has been checked in industrial uses. The PLC controller functionally constitutes a master device, which is why in the Modbus TCP network it is the *master* device (client), while the computer is the *slave* device (server). The request to establish connection is realised via the master device, while data exchange blocks are physically located in computer memory and they are read by both devices.

Providing the above-mentioned functionality may also be realised in any other manner, which will be obvious to a person skilled in the art. Therefore, it will be obvious to a person skilled in the art that the control system may be a generally known computer system consisting of hardware and software, and it should comprise, but does not have to be limited to the following elements, i.e. a processor, memory, a controller, a computer program comprising instructions performed by the processor, as well as input and/or output devices. And so, the control system may constitute a unit consisting of a known computer with an integrated controller/control unit, or the unit realising the tasks of the system may be a known computer connected to a programmable logical PLC controller.

In the described embodiment, the readjustment of the positioner 2 may be performed in two ways. In a mode known as the *Manual Mode,* a single servomotor of positioner 2 is switched to the desired position by pressing and holding the respective button from the control desktop of the positioner. The set of buttons for manual control of servomotors is connected to the inputs of the PLC controller and is operated without participation from the control system. On the other hand, in the mode described as the *Automatic Mode,* the control of the positioner takes place via the control system, being an object of the present invention.

In the described embodiment, operation of the control and visualisation system is realised by means of a graphical user interface displayed on the monitor of computer 1, a keyboard and three multifunctional buttons placed on the side of monitor 1. It is possible to use another combination of peripheral devices.

In the presented embodiment, the management of user accounts has been implemented. It is possible to turn this functionality off or implement it in a different manner. Before commencing work with the system, each user 4 is obliged to log into an account protected by a password. Two levels of authorisation have been provided: the higher one, defined as the *Administrator,* and the lower one, defined as the *Standard User.* Both types of accounts enable conducting for a product the process of welding using automatic control and visualisation. The *Administrator* accounts, as opposed to the *Standard User* accounts, additionally enable adding, deleting and editing user accounts.

The *Administrator* accounts, as opposed to the *Standard User* accounts, also enable adding, deleting and editing welding processes for the individual products. Defining the process of welding is a one-time activity for the given product type, necessary to commence its welding using the control and visualisation system. Defining the processes for individual products is performed by authorised persons who have access to the *Administrator* accounts.

Defining the process of welding for a product comprises indicating a previously prepared file with a technological welding instruction and creating positioner settings associated with this instruction. The instructions are stored in "pdf" files, whose subsequent pages comprise the description of individual welding operations. Upon indicating the instruction, it becomes open on the first page, which in the described example comprises a description of mounting the detail 3 on the positioner plate 2. User 4 may commence defining the setting values. By means of buttons used for direct control of servomotors, they set the plate in a position which enables mounting the detail 3. Subsequently, by choosing the *Save* option, it saves the current positions of servomotors as positioner settings assigned to the first page of the welding instruction. Subsequently, the user 4 moves on to the second page of the instruction and by means of the buttons for direct control of servomotors they set the detail 3 in an optimal position for the technological operation described on the current page of the instruction. Subsequently, the user chooses the *Save* option, which causes the saving of the current setting values for the second page of the instruction. According to the methodology described above, the user 4 defines the positions of servomotors for all the pages of the instruction and ultimately saves a complete .xml file with the setting values associated with the current instruction.

In the described embodiment, such defined processes of welding details are stored on a computer disk in the form of two mutually related files with the extensions "pdf" and "xml". It is possible to store this data in any form on any data carrier.

In the described embodiment, upon completing the creation of settings and an approval by the user 4, the program returns to the first page of the instruction and automatically switches the positioner to the position previously assigned to this page. This is a position which enables demounting the element upon completing the creation of settings. Subsequently, upon demounting the element and the user's approval, the positioner 2 is automatically switched to position zero. It is the default position of the plate during stoppage and it is not defined by the user 4. At the same time, in the computer application, the current technological instruction is closed and a return is made to the main menu of the program.

Upon complete configuration of the process of welding the detail 3 according to the above description, any user 4, having previously logged into the system, may commence the process of welding this detail 3 using the control and visualisation system. The user 4 chooses a respective detail 3 from the list of defined processes and approves its initiation, which results in opening the respective technological instruction on the first page. According to the previous assumptions, this page will comprise the description of mounting parts on the positioner plate, and during the creation of settings, the proper position of plate enabling the performance of this operation was assigned to it. Upon choosing the *Switch* option, the system automatically switches the positioner 2 from position zero to the position assigned to the current page of the instruction. User 4 performs the mounting of detail 3 according to the description, upon which they choose the option *Further,* thus moving on to the second page of the instruction. Upon choosing the *Switch* option, the system automatically switches the positioner 2 to the position assigned to the second page of the instruction. User 4 commences the welding operation described on the current page of the instruction, and upon its completion they choose the *Further* option. According to the methodology described above, user 4 performs subsequent operations of the technological process. Upon completing all operations and an approval by the user 4, the system returns to the first page of the instruction and automatically switches the positioner 2 to a position assigned to this page. It is a position which enables demounting the detail 3. Subsequently, upon demounting the detail 3 and an approval by the user 4, the system automatically switches the positioner into position zero. At the same time, in the computer application, the current instruction is closed and a return is made to the main menu of the program. Because the settings are defined by the actual configuration of the positioner with the attached detail, and subsequently by reading the actual positions of the drives, such a method eliminates the risk of introducing incorrect values, which could, e.g. cause the detail to collide with the surroundings.

The example described above depicts the operating principle of the visualisation and control system. An authorised user (technologist) 4 defines all the settings of the positioner 2 once for the whole process of welding the given product, according to the subsequent operations included in the technological instruction. The system enables creating a base of so defined products. The next users 4 performing welding operations (welders) choose a proper product from the list of defined products and commence the process. The technological instruction is displayed on the monitor of the computer 1, and during the welding operations the operation of the system comes down to pushing the buttons *Switch* and *Next.* The first one of them results in automatic switching of the positioner 2 into positions defined by the technologist acc. to the setting values saved in computer memory, while the second one is responsible for moving on to the subsequent pages of the instruction.

The presented system being an object of the present invention simplifies the operation of switching the positioner during welding operations and allows shortening the duration of the process, particularly in the case of the necessity of multiple switching of a positioner with numerous degrees of freedom. Each time, there is provided an optimal placement of the product developed by a technologist, which guarantees proper placement of the weld during its application and ensures the freedom and safety of the person performing welding operations. At the same time, the integrated function of visualisation of the technological instruction ensures easy and clear access to the description of the performed work.

The operating principle of the system has also enabled simple implementation of the register of events recorded in the form of files, e.g. in the "csv" format, which allows a later analysis of the data on the time and course of realisation of the process of welding (timekeeping). Among the registered things are events related to the users' logging in, initiating and ending the processes of welding as well as initiating and ending the individual operations as part of a single process. It should be noted that pressing the *Switch* button by the welder during the process is equivalent with the initiation of the given technological operation, while pressing the *Further* button is clearly associated with ending the current operation. Depending on the needs, it is possible to implement a register of events with a higher or lower level of detail and record the data in a different form.

Operation of the system puts particular emphasis on safety, which is why each operation of automatic switching of the positioner requires a clear approval of the operator. Each initiated movement of the positioner may also be interrupted by the emergency stop button, directly connected to the servomotors, disregarding the visualisation and control system.

The system also has a set of additional functionalities, whose usefulness was confirmed by the practice of welding operations. It is possible to return to the previous pages of the technological instruction by means of the *Previous* button, as well as to freely browse the instruction pages by means of the *Previous* and *Next* buttons, without switching the position of the plate and initiating technological operations. It is possible for the user to temporarily lock the panel during welding operations, when it is necessary to temporarily leave the station. There is also a possibility to record the progress of work and to end it along with demounting the product, when the process of welding has not been completed, and to resume the process from the last performed operation. The function of creating and saving personalised settings for the individual welders has also been implemented. The creation of personalised settings involves minor modifications of settings created by a technologist, so as to adjust them to the individual predispositions of welders, such as the height. In atypical situations, each user has the possibility to manually correct the position of the plate by means of manual control buttons.
The visualisation system for the process works based on a program executed on a computer working under the management of the Windows system and realising the following functionalities:
- displaying the welding technology in the form of static images presenting the subsequent steps of welding,
- displaying settings and additional data from the PLC controller as part of the visualisation,
- transmitting to the PLC controller the settings previously assigned to each step of welding,
- creating new settings in files, assigned respectively to the steps of welding,
- managing the users' accounts enabling the identification of employees and personalisation of settings,
- creating event register files, enabling diagnostics of malfunctions and recording the employees' working time.

## Claims

1. A control and visualisation system for a process of welding or mounting details using a multiaxial positioner, comprising:
a multiaxial positioner provided with at least one actuator, providing the possibility of positioning a detail at least in one axis;
a control system, comprising at least a processor, a memory, a controller, a computer program comprising instructions performed by the processor, related to a control method for the multiaxial positioner, as well as one or more input/output devices;
a user interface, preferably a graphical user interface, adapted to manage and/or control the process by a user;
a display, adapted to a presentation of information and/or management and control of the process by the user, preferably by means of a graphical user interface,
**characterised in that** the control system is configured in such a manner that based on setting values assigned to each stage of the process and/or a positioned detail (3), a screen (1) presents the stage of the process and/or the positioned detail (3), wherein at the same time the at least one actuator of the multiaxial positioner (2), via commands transmitted by the system to this actuator, is set into position according to the previously defined setting values, corresponding to the stage of the process and/or detail (3) presented on the screen (1).

2. The system according to claim 1, **characterised in that** the setting values are saved in a file stored in the system memory or on another data carrier, particularly an external one, whose contents may be read and processed by the control system.

3. The system according to claim 1 or 2, **characterised in that** the setting values assigned to the given stage of the process or detail (3) are displayed on the screen (1), and the user (4) defines the settings of the multiaxial positioner (2), introducing these setting values by means of the user interface, as a result of which the control system transmits a signal to the actuators which position the detail (3) according to the given setting values.

4. The system according to claim 1 or 2 or 3, **characterised in that** the settings are defined by a real configuration of the positioner with the attached detail and by reading real positions of the actuators.

5. The system according to claim 1 or 3 or 4, **characterised in that** the actuators are in the form of servomotors.

6. The system according to claim 1, **characterised in that** the control system consists of a computer with an integrated controller/control unit which transmits instructions to the actuators.

7. The system according to claim 1, **characterised in that** the control system consists of the computer connected to a programmable logical PLC controller which transmits instructions to the actuators.

8. The system according to claim 7, **characterised in that** in order to connect the computer to the PLC controller, a Modbus TCP protocol is used, based on a client-server structure, the PLC controller being a client-type device (master) and the computer being a server-type device (slave).

9. A control method for a multiaxial welding positioner, comprising:
controlling a multiaxial positioner, provided with at least one actuator, providing the possibility of positioning a detail at least in one axis;
by means of a control system, which comprises at least a processor, a memory, a controller, a computer program comprising instructions performed by the processor, related to the control method for the multiaxial positioner, as well as one or more input/output devices;
and using a user interface, preferably a graphical user interface, adapted to manage and/or control the process by a user; and
a display, adapted to a presentation of information and/or management and control of the process by the user, preferably by means of a graphical user interface,
**characterised in that** the control system is configured in such a manner that it comprises the following steps:
displaying on a screen (1) information on the subsequent stages of the process and/or presentation of the positioned detail (3);
at the same time setting the at least one actuator in a position according to predefined setting values, corresponding to the stage of the process and/or detail (3) presented on the screen (1), via commands transmitted by the system to this actuator.

10. The method according to claim 9, **characterised in that** the setting values are saved in a file stored in the system memory or on another data carrier, particularly an external one, whose contents may be read and processed by the control system.

11. The method according to claim 9 or 10, **characterised in that** the setting values assigned to the given stage of the process and/or detail (3) are displayed on the screen (1), and the user (4) defines the settings of the multiaxial positioner (2), introducing these setting values by means of the user interface, as a result of which the control system saves these values in the memory and later transmits a signal to the actuators which position the detail according to the saved setting values.

12. The method according to claim 9 or 10 or 11, **characterised in that** the settings are defined based on a real configuration of the positioner with the attached detail and on reading real positions of the actuators.

13. The method according to claim 9 or 11 or 12, **characterised in that** the actuators are in the form of servomotors.

14. The method according to claim 9, **characterised in that** the control system consists of a computer with an integrated controller/control unit which transmits instructions to actuators.

15. The method according to claim 9, **characterised in that** the control system consists of the computer connected to a programmable logical PLC controller which transmits instructions to the actuators.

16. The method according to claim 15, **characterised in that** in order to connect the computer to the PLC controller, a Modbus TCP protocol his used, based on a client-server structure, the PLC controller being a client-type device (master) and the computer being a server-type device (slave).

17. A multiaxial welding positioner, provided with at least one actuator providing the possibility of positioning a detail in at least one axis, **characterised in that** it has a control and visualisation system for a process of welding or mounting according to any of the claims from 1 to 8.
